# EUROPÄISCHE PATENTANMELDUNG

(11) **EP 3 273 268 A1**
(43) Veröffentlichungstag der Anmeldung: **24.01.2018**
(21) Anmeldenummer: 17179445.6
(22) Anmeldetag: 04.07.2017
(51) Int. Cl.: G01S 17/42, G01C 15/00, G01S 7/481, G02B 7/182, G02B 26/10

(54) **UMLENKSPIEGELEINRICHTUNG EINER OPTOELEKTRONISCHEN DETEKTIONSVORRICHTUNG, DETEKTIONSVORRICHTUNG UND FAHRERASSISTENZSYSTEM MIT EINER DETEKTIONSVORRICHTUNG**

(30) Priorität: 07.07.2016 DE 102016112478
(71) Anmelder: Valeo Schalter und Sensoren GmbH, 74321 Bietigheim-Bissingen (DE)
(72) Erfinder: Nies, Juergen, 74321 Bietigheim-Bissingen (DE); Horvath, Peter, 74321 Bietigheim-Bissingen (DE); Schuler, Thomas, 74321 Bietigheim-Bissingen (DE)

(57) **Zusammenfassung**

Es werden Umlenkspiegeleinrichtung (36) einer oder für eine insbesondere nach einem Lichtimpulslaufzeitverfahren arbeitenden insbesondere optoelektronischen Detektionsvorrichtung (12), insbesondere eines oder für ein Fahrerassistenzsystem (18) eines Fahrzeugs, eine Detektionsvorrichtung (12) und ein Fahrerassistenzsystem (18) beschrieben. Die Umlenkspiegeleinrichtung (36) umfasst wenigstens einen Spiegel (38) zur Umlenkung von mit wenigstens einem Sender (26) der Detektionsvorrichtung (12) ausgesendeten Sendesignalen (30) in einen Überwachungsbereich (14) der Detektionsvorrichtung (12) und/oder von Empfangssignalen (32) aus von einer Oberfläche wenigstens eines in dem Überwachungsbereich (14) befindlichen Objekts (16) reflektierten Sendesignalen (30). Wenigstens ein Spiegel (38) der Umlenkspiegeleinrichtung (36) ist mit wenigstens einem elektrischen Antriebsmotor (46) um eine Rotationsachse (42) drehbar. Die Umlenkspiegeleinrichtung (36) weist wenigstens einen Drehwinkelgeber (66) auf, mit dem eine Winkelstellung des wenigstens einen Spiegels (38) bezüglich der Rotationsachse (42) bestimmt werden kann. Wenigstens ein Rotor (44) des wenigstens einen Antriebsmotors (46) weist wenigstens eine Maßverkörperung (64) des wenigstens einen Drehwinkelgebers (66) auf.

## Beschreibung

### Technisches Gebiet

Die Erfindung betrifft eine Umlenkspiegeleinrichtung einer oder für eine insbesondere nach einem Lichtimpulslaufzeitverfahren arbeitenden insbesondere optoelektronischen Detektionsvorrichtung, insbesondere eines oder für ein Fahrerassistenzsystem eines Fahrzeugs, mit wenigstens einem Spiegel zur Umlenkung von mit wenigstens einem Sender der Detektionsvorrichtung ausgesendeten Sendesignalen in einen Überwachungsbereich der Detektionsvorrichtung und/oder von Empfangssignalen aus von einer Oberfläche wenigstens eines in dem Überwachungsbereich befindlichen Objekts reflektierten Sendesignalen, wobei wenigstens ein Spiegel der Umlenkspiegeleinrichtung mit wenigstens einem elektrischen Antriebsmotor um eine Rotationsachse drehbar ist und wobei die Umlenkspiegeleinrichtung wenigstens einen Drehwinkelgeber aufweist, mit dem eine Winkelstellung des wenigstens einen Spiegels bezüglich der Rotationsachse bestimmt werden kann.

Ferner betrifft die Erfindung eine Detektionsvorrichtung, insbesondere eines oder für ein Fahrerassistenzsystem eines Fahrzeugs, wobei die Detektionsvorrichtung insbesondere optoelektronisch nach einem Lichtimpulslaufzeitverfahren arbeitet, aufweisend wenigstens eine Umlenkspiegeleinrichtung mit wenigstens einem Spiegel zur Umlenkung von mit wenigstens einem Sender der Detektionsvorrichtung ausgesendeten Sendesignalen in einen Überwachungsbereich der Detektionsvorrichtung und/oder von Empfangssignalen aus von einer Oberfläche wenigstens eines in dem Überwachungsbereich befindlichen Objekts reflektierten Sendesignalen, wobei wenigstens ein Spiegel der Umlenkspiegeleinrichtung mit wenigstens einem elektrischen Antriebsmotor um eine Rotationsachse drehbar ist und wobei die Umlenkspiegeleinrichtung wenigstens einen Drehwinkelgeber aufweist, mit dem einer Winkelstellung des wenigstens einen Spiegels bezüglich der Rotationsachse bestimmt werden kann.

Außerdem betrifft die Erfindung ein Fahrerassistenzsystem eines Fahrzeugs mit wenigstens einer insbesondere nach einem Lichtimpulslaufzeitverfahren arbeitenden insbesondere optoelektronischen Detektionsvorrichtung, wobei die wenigstens eine Detektionsvorrichtung aufweist wenigstens eine Umlenkspiegeleinrichtung mit wenigstens einem Spiegel zur Umlenkung von mit wenigstens einem Sender der Detektionsvorrichtung ausgesendeten Sendesignalen in einen Überwachungsbereich der Detektionsvorrichtung und/oder von Empfangssignalen aus von einer Oberfläche wenigstens eines in dem Überwachungsbereich befindlichen Objekts reflektierten Sendesignalen, wobei wenigstens ein Spiegel der Umlenkspiegeleinrichtung mit wenigstens einem elektrischen Antriebsmotor um eine Rotationsachse drehbar ist und wobei die Umlenkspiegeleinrichtung wenigstens einen Drehwinkelgeber aufweist, mit dem eine Winkelstellung des wenigstens einen Spiegels bezüglich der Rotationsachse bestimmt werden kann.

### Stand der Technik

Aus der EP 2 434 312 B1 ist ein Laserscanner bekannt zur Erfassung von Objekten in einem Überwachungsbereich, mit einem Lichtsender zum Aussenden eines Sendelichtstrahls, einer drehbaren Ablenkeinheit zur periodischen Ablenkung des Sendelichtstrahls in den Überwachungsbereich, einem Motor, um die Ablenkeinheit in eine kontinuierliche Drehbewegung zu versetzen, einem Lichtempfänger zum Erzeugen eines Empfangssignals aus dem von Objekten in dem Überwachungsbereich remittierten Lichtstrahl sowie einer Winkelmesseinheit, mittels derer die Winkelstellung der Ablenkeinheit erfassbar ist und die eine Winkelmaßverkörperung aufweist. Die Winkelmaßverkörperung weist eine Strichscheibe oder ein Zahnrad auf und ist mit der Ablenkeinheit als gemeinsames Spritzgussteil einstückig ausgebildet. Der Laserscanner weist eine Gabellichtschranke zum Abtasten der Winkelmaßverkörperung auf.

Der Erfindung liegt die Aufgabe zugrunde, eine Umlenkspiegeleinrichtung, eine Detektionsvorrichtung und ein Fahrerassistenzsystem der eingangs genannten Art zu gestalten, bei denen die Umlenkspiegeleinrichtung, insbesondere der wenigstens eine Antriebsmotor und der wenigstens eine Drehwinkelgeber, einfacher und/oder kompakter ausgestaltet ist.

### Offenbarung der Erfindung

Diese Aufgabe wird erfindungsgemäß dadurch gelöst, dass wenigstens ein Rotor des wenigstens einen Antriebsmotors wenigstens eine Maßverkörperung des wenigstens einen Drehwinkelgebers aufweist.

Erfindungsgemäß ist wenigstens eine Maßverkörperung mit dem wenigstens einen Rotor kombiniert. Auf diese Weise kann die Umlenkspiegeleinrichtung insgesamt einfacher und kompakter aufgebaut sein. Ferner ist durch die direkte Verbindung der wenigstens einen Maßverkörperung mit dem wenigstens einen Rotor eine genauere Bestimmung des Drehwinkels des wenigstens einen Rotors möglich. Mit dem wenigstens einen Drehwinkelgeber kann so eine momentane Winkelstellung des wenigstens einen Spiegels der Umlenkspiegeleinrichtung besser und genauer erfasst werden.

Vorteilhafterweise kann die wenigstens eine Maßverkörperung wenigstens eine Markierung aufweisen. Die wenigstens eine Maßverkörperung kann mittels einem entsprechenden Abtastsensor lesbar oder Abtastsensor sein.

Vorteilhafterweise kann der wenigstens eine Drehwinkelgeber wenigstens einen Abtastsensor aufweisen. Der wenigstens eine Abtastsensor kann bezüglich der Rotationsachse stationär, also nicht drehbar, in der Nähe der wenigstens einen Maßverkörperung positioniert sein. Der wenigstens eine Abtastsensor kann sich vorteilhafterweise von der Rotationsachse aus betrachtet wenigstens teilweise neben einer Umfangsseite und/oder oberhalb und/oder unterhalb der wenigstens einen Maßverkörperung, insbesondere des wenigstens einen Rotors, befinden. Auf diese Weise kann der wenigstens eine Abtastsensor platzsparend angeordnet werden.

Vorteilhafterweise kann die Detektionsvorrichtung wenigstens eine Steuer- und Auswerteelektronik aufweisen. Mit dieser können Funktionsbauteile der Detektionsvorrichtung, insbesondere Sender, Empfänger, Antriebsmotor und/oder Drehwinkelgeber, betrieben, gesteuert und/oder ausgelesen werden. Die mit dem wenigstens einen Abtastsensor erfassten Änderungen der Maßverkörperung können an die wenigstens eine Steuer-und Auswerteelektronik weitergegeben werden. Mit der Steuer- und Auswerteelektronik kann ein Drehwinkel des Rotors und daraus eine Winkelstellung des wenigstens einen Spiegels ermittelt werden. Mit der wenigstens einen Steuer- und Auswerteelektronik können aus elektrischen Empfängersignalen, die der wenigstens eine Empfänger aus den insbesondere optischen Empfangssignalen ermittelt, entsprechende Objektdaten, insbesondere Entfernung, Richtung und/oder Relativgeschwindigkeit, eines erfassten Objekts ermittelt und weitergeleitet werden.

Vorteilhafterweise kann wenigstens eine Maßverkörperung an oder mit wenigstens einer Codierscheibe realisiert sein.

Vorteilhafterweise kann der wenigstens eine Rotor wenigstens eine Codierscheibe aufweisen oder als eine derartige ausgestaltet sein. Mit der wenigstens einen Codierscheibe kann wenigstens eine Maßverkörperung zur Bestimmung eines Drehwinkels des Rotors und damit einer Winkelstellung des wenigstens einen Spiegels realisiert werden. Mit anderen Worten die Maßverkörperung ist unmittelbar durch den Rotor des Antriebsmotors gebildet, derart dass die Indexelemente unmittelbar am Umlauf des Rotors ausgebildet sind.

Vorteilhafterweise kann der wenigstens eine Rotor wenigstens einen Permanentmagneten aufweisen. Entsprechend kann wenigstens ein Stator des Antriebsmotors wenigstens eine Erregerspule aufweisen. Alternativ oder zusätzlich kann der wenigstens eine Rotor wenigstens eine Erregerspule und wenigstens ein Stator kann wenigstens einen Permanentmagneten aufweisen. Mit wenigstens einem Erregerfeld wenigstens einer Erregerspule kann eine Drehgeschwindigkeit und ein Drehmoment des wenigstens einen Antriebsmotors vorgegeben, insbesondere gesteuert und/oder geregelt, werden.

Vorteilhafterweise kann wenigstens ein Sender wenigstens eine Sendeoptik aufweisen. Mit der wenigstens einen Sendeoptik können die Sendesignale beeinflusst, insbesondere fokussiert, werden. Zusätzlich oder alternativ kann wenigstens ein Empfänger wenigstens eine Empfangsoptik aufweisen. Mit der wenigstens einen Empfangsoptik können die Empfangssignale beeinflusst, insbesondere fokussiert, werden.

Vorteilhafterweise kann wenigstens ein Sender zum Aussenden von gepulsten Sendesignalen ausgestaltet sein. Entsprechend kann wenigstens ein Empfänger zum empfangen von gepulsten Empfangssignalen ausgestaltet sein.

Vorteilhafterweise kann die Detektionsvorrichtung nach einem Lichtlaufzeitverfahren arbeiten. Nach dem Lichtimpulslaufzeitverfahren arbeitende optische Detektionsvorrichtungen können als Time-of-Flight- (TOF), Light-Detection-and-Ranging-Systeme (LiDAR), Laser-Detection-and-Ranging-Systeme (LaDAR) oder dergleichen ausgestaltet und bezeichnet werden. Dabei wird eine Laufzeit zwischen dem Aussenden eines Sendesignals, insbesondere eines Lichtpulses, mit dem wenigstens einen Sender und dem Empfang des entsprechenden reflektierten Empfangssignals mit dem wenigstens einen Empfänger gemessen und daraus eine Entfernung zwischen der Detektionsvorrichtung und dem erfassten Objekt ermittelt.

Vorteilhafterweise kann die Detektionsvorrichtung als scannendes System ausgestaltet sein. Dabei kann mit den Sendesignalen ein Überwachungsbereich abgetastet, also abgescannt, werden. Dazu können die entsprechenden Sendesignale, insbesondere Sendestrahlen, bezüglich ihrer Ausbreitungsrichtung über den Überwachungsbereich sozusagen geschwenkt werden. Hierbei kann die erfindungsgemäße Umlenkspiegeleinrichtung zum Einsatz kommen.

Vorteilhafterweise kann die Detektionsvorrichtung als laserbasiertes Entfernungsmesssystem ausgestaltet sein. Das laserbasierte Entfernungsmesssystem weist als Lichtquelle des wenigstens einen Senders wenigstens einen Laser, insbesondere einen Diodenlaser, auf. Mit dem wenigstens einen Laser können insbesondere gepulste Sendestrahlen als Sendesignale gesendet werden. Mit dem Laser können Sendesignale in für das menschliche Auge sichtbaren oder nicht sichtbaren Frequenzbereichen emittiert werden. Entsprechend kann wenigstens ein Empfänger einen für die Frequenz des ausgesendeten Lichtes ausgelegten Detektor, insbesondere eine Fotodiode, aufweisen Das laserbasierte Entfernungsmesssystem kann vorteilhafterweise ein Laserscanner sein. Mit einem Laserscanner kann ein Überwachungsbereich mit einem insbesondere gepulsten Laserstrahl abgetastet werden.

Vorteilhafterweise kann der wenigstens eine Sender wenigstens einen Oberflächenemitter aufweisen. Ein Oberflächenemitter, im englischen auch als vertical-cavity surface-emitting laser (VCSEL) bezeichnet, ist ein Halbleiterlaser, bei dem das Licht senkrecht zur Ebene des Halbleiterchips abgestrahlt wird. Derartige Sender können kostengünstig, klein und leistungsstark realisiert werden.

Die Erfindung kann vorteilhafterweise bei einem Fahrzeug, insbesondere einem Kraftfahrzeug, verwendet werden. Vorteilhafterweise kann die Erfindung bei einem Landfahrzeug, insbesondere einem Personenkraftwagen, Lastkraftwagen, einem Bus, einem Motorrad oder dergleichen, verwendet werden.

Die Detektionsvorrichtung kann vorteilhafterweise mit wenigstens einer elektronischen Steuervorrichtung des Fahrzeugs, insbesondere einem Fahrerassistenzsystem und/oder einer Fahrwerksregelung und/oder einer Fahrer-Informationseinrichtung, verbunden oder Teil einer solchen sein. Auf diese Weise können die mit der Detektionsvorrichtung erfassten Objektdaten an die Steuervorrichtung des Fahrzeugs übermittelt und zur Beeinflussung von Fahrfunktionen, insbesondere der Geschwindigkeit, einer Bremsfunktion, einer Lenkungsfunktion und/oder einer Ausgabe eines Hinweis- und/oder Warnsignals insbesondere für den Fahrer, verwendet werden.

Bei einer vorteilhaften Ausführungsform kann der wenigstens eine Antriebsmotor als Scheibenläufermotor ausgestaltet sein. Ein Scheibenläufermotor ist ein Elektromotor, dessen Rotor (Läufer) die Form einer Scheibe hat. Auf diese Weise kann der wenigstens eine Rotor und damit der gesamte wenigstens eine Antriebsmotor platzsparend ausgestaltet sein. Der dabei im Vergleich zu anderen Bauformen von Elektromotoren frei gewordene Bauraum kann für andere Bauteile, insbesondere wenigstens einen Spiegel und/oder wenigstens einen Drehwinkelgeber, verwendet werden.

Bei einer weiteren vorteilhaften Ausführungsform kann die wenigstens eine Maßverkörperung eine berührungslos, insbesondere magnetisch, wirkende Maßverkörperung sein. Auf diese Weise kann eine reibungsfreie Abtastung erfolgen. Diese kann besonders verschleißarm und mit geringerem Energieverlust realisiert werden. Eine magnetisch wirkende Maßverkörperung ist unempfindlich gegenüber Lichteinwirkung. Sie ist daher gut geeignet für eine optoelektronische Detektionseinrichtung. Eine magnetisch wirkende Maßverkörperung kann mit einem entsprechenden magnetisch wirkenden Abtastsensor berührungslos abgetastet werden.

Vorteilhafterweise kann die wenigstens eine magnetisch wirkende Maßverkörperung wenigstens zum Teil mittels wenigstens einem Permanentmagneten realisiert sein. Auf diese Weise kann auf elektrische Kontakte für die wenigstens eine magnetisch wirkende Maßverkörperung auf Seiten des Rotors verzichtet werden.

Alternativ oder zusätzlich kann die wenigstens eine magnetisch wirkende Maßverkörperung wenigstens zum Teil mittels wenigstens einem Elektromagneten realisiert werden. Auf diese Weise kann die Magnetisierung der wenigstens einen Maßverkörperung verändert werden.

Vorteilhafterweise kann wenigstens ein magnetisch wirkender Abtastsensor wenigstens einen Magnetfeldsensor, insbesondere einen Hall-Sensor oder dergleichen, aufweisen. Mit dem wenigstens einen Magnetfeldsensor können zumindest Änderungen eines Magnetfelds, welches die wenigstens eine Maßverkörperung charakterisiert, erfasst werden.

Bei einer weiteren vorteilhaften Ausführungsform kann wenigstens ein Magnetfeld des wenigstens einen Rotors wenigstens eine magnetisch wirkende Maßverkörperung wenigstens mit bilden. Auf diese Weise kann das Magnetfeld des Rotors sowohl zum Antrieb als auch zur Bestimmung des Drehwinkels des Rotors, insbesondere der Winkelstellung des wenigstens einen Spiegels, verwendet werden. Ein Aufwand, insbesondere ein Montageaufwand und/oder ein Bauteilaufwand, zur Herstellung der Umlenkspiegeleinrichtung kann so verringert werden. Außerdem kann so der wenigstens eine Antriebsmotor mit dem wenigstens einen Drehwinkelgeber platzsparender und kompakter aufgebaut werden.

Vorteilhafterweise kann der wenigstens eine Rotor wenigstens einen Permanentmagneten aufweisen. Das Magnetfeld des wenigstens einen Permanentmagneten kann in Verbindung mit einem entsprechenden Erregerfeld eines Stators des Antriebsmotors zum Antrieb des wenigstens einen Rotors verwendet werden. Zusätzlich kann das Magnetfeld des wenigstens einen Permanentmagneten als Maßverkörperung des wenigstens einen Drehwinkelgebers dienen.

Alternativ oder zusätzlich kann der wenigstens eine Stator wenigstens einen Permanentmagneten und entsprechend der wenigstens eine Rotor wenigstens eine Erregerspule aufweisen. Das mit der wenigstens einen Erregerspule erzeugte Magnetfeld kann sowohl zum Antrieb des Rotors als auch als Maßverkörperung für den wenigstens einen Drehwinkelgeber dienen.

Vorteilhafterweise können mehrere Permanentmagneten und/oder Erregerspulen bezüglich der Rotationsachse umfangsmäßig am Rotor angeordnet sein. Auf diese Weise kann ein gleichmäßiger Antrieb erreicht werden. Außerdem kann eine bessere Auflösung bei der Bestimmung des Drehwinkels ermöglicht werden, wodurch die Bestimmung des Drehwinkels des Rotors und damit der Winkelstellung des wenigstens einen Spiegels genauer wird.

Bei einer weiteren vorteilhaften Ausführungsform kann der wenigstens eine Drehwinkelgeber wenigstens ein Referenzmittel aufweisen zur Charakterisierung einer Nullpunktstellung des wenigstens einen Rotors und/oder des wenigstens einen Spiegels. Auf diese Weise kann der wenigstens eine Drehwinkelgeber kalibriert werden. Die Nullpunktstellung kann einer vorgegebenen Winkelstellung des wenigstens einen Spiegels zugeordnet werden.

Vorteilhafterweise kann wenigstens ein Referenzmittel als Nullpunktmarkierung der wenigstens einen Maßverkörperung realisiert sein. Auf diese Weise kann die Nullpunktstellung einfach bereits am Rotor festgelegt werden. Vorteilhafterweise kann die Nullpunktmarkierung als lokale Veränderung der Magnetisierung einer magnetisch wirkenden Maßverkörperung realisiert sein.

Alternativ oder zusätzlich kann wenigstens ein Referenzmittel in Form wenigstens eines Referenzdetektors für Sendestrahlen auf einer Ausgangsseite der Umlenkspiegeleinrichtung für die Sendestrahlen unter einer vorgegebenen Referenz-Winkelstellung des wenigstens einen Spiegels angeordnet sein. Mit dem wenigstens einen Referenzdetektor kann beim Drehen des Rotors in der entsprechenden Drehstellung das wenigstens eine Sendesignal erfasst werden, so dass in dieser Drehstellung des Rotors die entsprechende Referenz-Winkelstellung des wenigstens einen Spiegels zugeordnet werden kann.

Vorteilhafterweise kann sich der wenigstens eine Referenzdetektor außerhalb des mit dem wenigstens eine Sendesignal abzutastenden Überwachungsbereichs befinden. Auf diese Weise wird der Überwachungsbereich durch den wenigstens einen Referenzdetektor nicht eingeschränkt.

Bei einer weiteren vorteilhaften Ausführungsform kann an dem wenigstens einen Rotor, insbesondere gegebenenfalls an einer Codierscheibe, wenigstens ein Spiegel, insbesondere ein Sendespiegel und/oder ein Empfangsspiegel, der Umlenkspiegeleinrichtung angeordnet sein. Auf diese Weise kann der wenigstens eine Spiegel direkt mit dem wenigstens einen Rotor gedreht werden. So kann aus dem Drehwinkel des wenigstens einen Rotors direkt eine Winkelstellung des wenigstens einen Spiegels ermittelt werden.

Vorteilhafterweise kann die wenigstens eine Maßverkörperung über den Rotor mit dem wenigstens einen Spiegel mechanisch verbunden und mit diesem um die Rotationsachse drehbar sein.

Bei einer weiteren vorteilhaften Ausführungsform kann der wenigstens eine Rotor und/oder die wenigstens eine Maßverkörperung, insbesondere wenigstens eine Codierscheibe, bezüglich der Rotationsachse axial zwischen wenigstens einem Sendespiegel und wenigstens einem Empfangsspiegel angeordnet sein. Auf diese Weise kann der wenigstens eine Rotor und/oder die wenigstens eine Maßverkörperung zusätzlich als optische Falle dienen. So können auf den wenigstens einen Sendespiegel auftreffende und umgelenkte Sendestrahlen und auf den wenigstens einen Empfangsspiegel auftreffende und umgelenkte Empfangsstrahlen optisch voneinander getrennt werden. Eine gegenseitige Störung kann so vermieden werden.

Vorteilhafterweise können der wenigstens eine Empfangsspiegel und der wenigstens eine Sendespiegel unterschiedlich groß sein. Der wenigstens eine Abtastsensor und/oder wenigstens ein Stator des wenigstens einen Antriebsmotors kann sich vorteilhafterweise auf der Seite des entsprechend kleineren Spiegels befinden. Auf diese Weise kann ein freier Bauraum aufseiten des kleineren Spiegels genutzt werden.

Bei einer weiteren vorteilhaften Ausführungsform kann eine Rotationsachse des wenigstens einen Rotors wenigstens abschnittsweise durch wenigstens einen Spiegel, insbesondere einen Sendespiegel und/oder einen Empfangsspiegel, verlaufen. Auf diese Weise kann der wenigstens eine Spiegel nahe an der Rotationsachse gedreht werden. So kann ein Zusammenhang zwischen dem Drehwinkel des wenigstens einen Rotors und der Winkelstellung des wenigstens einen Spiegels genauer ermittelt werden.

Vorteilhafterweise kann wenigstens ein Spiegel auf gegenüberliegenden Seiten jeweils eine Spiegelfläche aufweisen. So kann insgesamt über einen größeren Drehwinkel des wenigstens einen Rotors, vorzugsweise nahezu über die gesamten 360°einer vollständigen Umdrehung, eine Spiegelwirkung erzielt werden.

Vorteilhafterweise kann die die Rotationsachse des wenigstens einen Rotors zwischen den gegenüberliegenden Spiegelflächen wenigstens eines zweiseitigen Spiegels angeordnet sein. Auf diese Weise können beide Spiegelflächen platzsparend und nah an der Rotationsachse angeordnet sein. So können die Winkelstellungen der Spiegelflächen jeweils genauer aus dem Drehwinkel des Rotors bestimmt werden.

Ferner wird die technische Aufgabe erfindungsgemäß mit der Detektionsvorrichtung dadurch gelöst, dass wenigstens ein Rotor des wenigstens einen Antriebsmotors wenigstens eine Maßverkörperung des wenigstens einen Drehwinkelgebers aufweist.

Ferner wird die technische Aufgabe erfindungsgemäß mit dem Fahrerassistenzsystem dadurch gelöst, dass wenigstens ein Rotor des wenigstens einen Antriebsmotors wenigstens eine Maßverkörperung des wenigstens einen Drehwinkelgebers aufweist.

Im Übrigen gelten die im Zusammenhang mit der erfindungsgemäßen Umlenkspiegeleinrichtung, der erfindungsgemäßen Detektionsvorrichtung und dem erfindungsgemäßen Fahrerassistenzsystem und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen.

Es zeigen schematisch
- Figur 1: eine Vorderansicht eines Kraftfahrzeugs mit einem Laserscanner, welcher Teil eines Fahrerassistenzsystems ist;
- Figur 2: ein Blockschaltbild des Fahrerassistenzsystems mit dem Laserscanner aus der Figur 1;
- Figur 3: eine Draufsicht einer Umlenkspiegeleinrichtung des Laserscanners aus den Figuren 1 und 2 mit Blick auf einen Sendespiegel;
- Figur 4: eine Draufsicht der Umlenkspiegeleinrichtung des Laserscanners aus den Figuren 1 und 3 mit Blick auf einen Empfangsspiegel;
- Figur 5: eine Seitenansicht der Umlenkspiegeleinrichtung des Laserscanners aus den Figuren 1 bis 4 in Richtung eines Pfeils V aus der Figur 3.

In den Figuren sind gleiche Bauteile mit gleichen Bezugszeichen versehen.

### Ausführungsform(en) der Erfindung

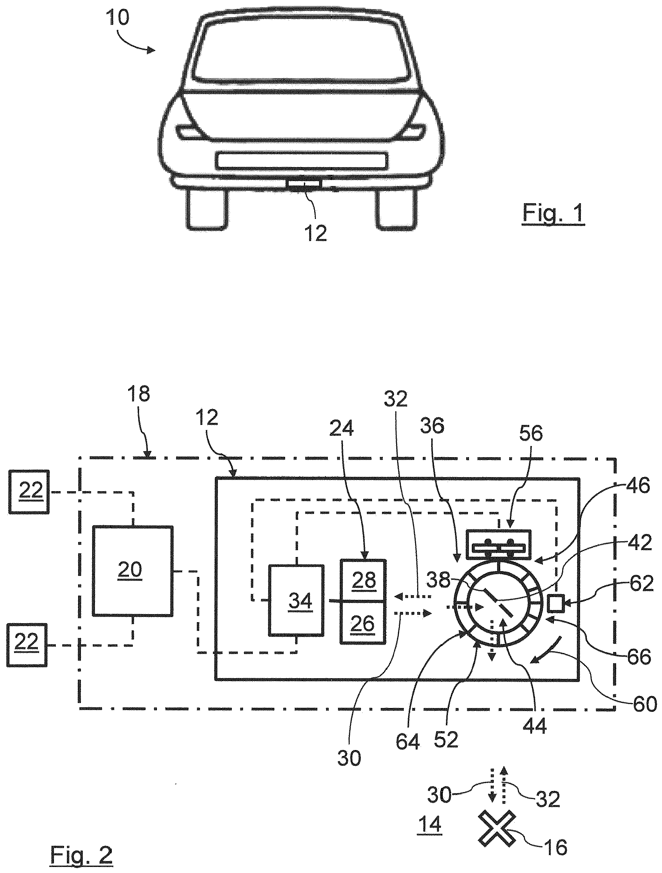

In der Figur 1 ist ein Kraftfahrzeug 10 in Form eines Personenkraftwagens in der Vorderansicht gezeigt. Das Kraftfahrzeug 10 verfügt über eine optoelektronische Detektionsvorrichtung in Form eines Laserscanners 12, welcher beispielhaft in einer vorderen Stoßstange angeordnet ist. Mit dem Laserscanner 12 kann ein Überwachungsbereich 14 in Fahrtrichtung des Kraftfahrzeugs 10 betrachtet in horizontaler Richtung von links nach rechts oder umgekehrt abgetastet und so der Überwachungsbereich 14 auf Objekte, beispielsweise Hindernisse oder Kraftfahrzeuge, hin überwacht werden. In der Figur 2 ist beispielhaft ein Objekt 16 mit einem Kreuz angedeutet.

Der Laserscanner 12 ist Teil eines Fahrerassistenzsystems 18 des Kraftfahrzeugs 10. Mit dem Fahrerassistenzsystem 18 können Funktionen des Kraftfahrzeugs 10 beeinflusst werden und so ein Fahrer unterstützt werden. Bei den Funktionen kann es sich beispielsweise um eine Beschleunigungsfunktion, Bremsfunktion, Lenkungsfunktion oder eine Ausgabe von optischen oder akustischen Hinweisen oder Warnsignalen handeln.

Das Fahrerassistenzsystem 18 weist eine Steuerelektronik 20 auf, welche funktional mit entsprechenden Funktionsteilen 22 des Kraftfahrzeugs 10 verbunden ist. Beispielhaft sind in der Figur 2 zwei derartige Funktionsbauteile 22 dargestellt. Bei den Funktionsteilen 22 kann es sich um eine Motorsteuerung, ein Bremssystem, ein Lenkungssystem oder ein Signalausgabesystem handeln. Signal- und/oder Steuerleitungen des Fahrerassistenzsystems 18 sind in der Figur 2 gestrichelt angedeutet.

Der Laserscanner 12 umfasst eine Sende- und Empfängereinheit 24 mit einem optoelektronischen Sender 26 und einem optoelektronischen Empfänger 28. Die Sende- und Empfängereinheit 24 ist in der Figur 2 lediglich schematisch angedeutet. Der Sender 26 und der Empfänger 28 sind in der Figur 2 der besseren Übersichtlichkeit wegen beispielhaft nebeneinander angeordnet. In Wirklichkeit sind sie bei dem gezeigten Ausführungsbeispiel in der Figur 2 übereinander angeordnet.

Bei dem Sender 26 handelt es sich beispielhaft um eine Halbleiterlaserdiode, welche beispielhaft als Oberflächenemitter ausgestaltet sein kann. Mit dem Sender 26 können Sendesignale in Form von Lichtpulsen als Sendestrahlen 30 ausgesendet werden.

Bei dem Empfänger 28 handelt es sich beispielhaft um eine Fotodiode, welche in dem gleichen Frequenzbereich arbeitet, in dem der Sender 26 sendet. Mit dem Empfänger 28 können Sendestrahlen 30, welche von einer Oberfläche des Objekts 16 reflektiert und zurückgesendet werden, als Empfangsstrahlen 32 empfangen werden. Die optischen Empfangssignale der Empfangsstrahlen 32 können mit dem Empfänger 28 in elektronische Empfängersignale umgewandelt werden. Die Sendestrahlen 30 und die Empfangsstrahlen 32 sind in der Figur 2 jeweils durch entsprechende gepunktete Pfeile angedeutet.

Die Sender- und Empfangseinheit 24 verfügt ferner über entsprechende, hier nicht weiter interessierende Sende- und Empfangsoptiken, beispielsweise Linsenanordnungen, mit denen die Sendestrahlen 30 und die Empfangsstrahlen 32 entsprechend beeinflusst, beispielsweise fokussiert, werden können.

Der Laserscanner 12 umfasst des Weiteren eine Steuer- und Auswerteelektronik 34. Mit der Steuer- und Auswerteelektronik 34 können der Sender 26 und der Empfänger 28 gesteuert, ausgelesen und entsprechende elektronische Empfängersignale vom Empfänger 28 ausgewertet werden können. Die Steuer- und Auswerteelektronik 34 ist hierzu funktional mit der Sende- und Empfangseinheit 24 verbunden.

Ferner ist die Steuer- und Auswerteelektronik 34 funktional mit der Steuerelektronik 20 des Fahrerassistenzsystems 18 verbunden. So können die mit dem Laserscanner 12 ermittelten Objektdaten des erfassten Objekts 16 an die Steuerelektronik 20 übergeben werden. Bei den Objektdaten kann es sich beispielsweise um die Entfernung, die Richtung und/oder die Relativgeschwindigkeit erfassten Objekts 16 zum Kraftfahrzeug 10 handeln.

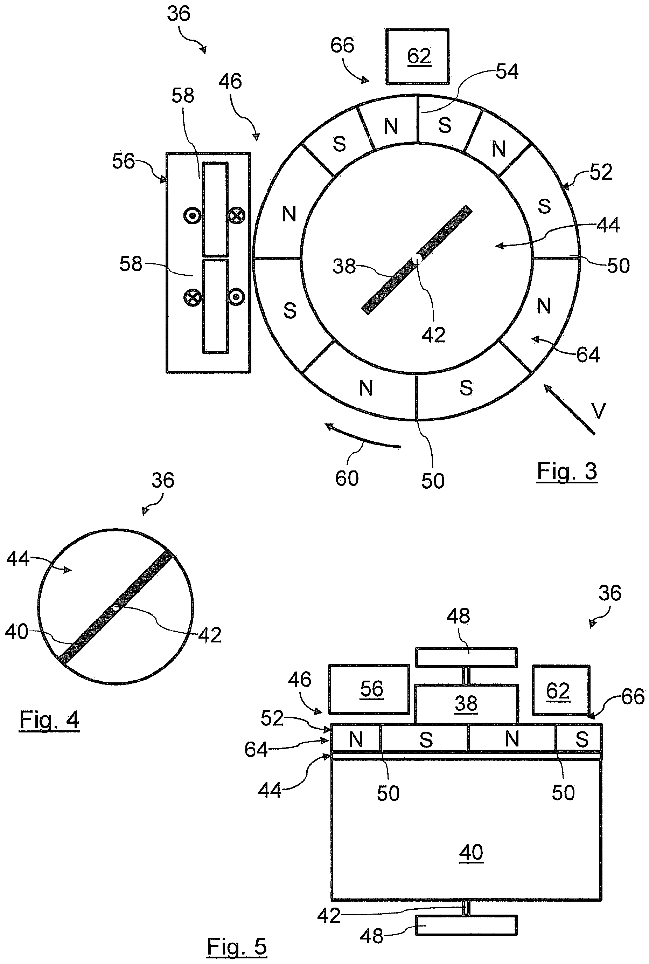

Der Laserscanner 12 weist außerdem eine Umlenkspiegeleinrichtung 36 auf. Die Umlenkspiegeleinrichtung 36 ist im Detail in den Figuren 3 bis 5 dargestellt. Mit der Umlenkspiegeleinrichtung 36 können die vom Sender 26 kommenden Sendestrahlen 30 in den Überwachungsbereich 14 umgelenkt werden. Durch Veränderung einer Winkelstellung der Umlenkspiegeleinrichtung 36 können die Sendestrahlen 30 über den Überwachungsbereich 14 geschwenkt und so dieser abgetastet werden. Entsprechend können die reflektierten Empfangsstrahlen 32 von dem Objekt 16 kommend mittels der Umlenkspiegeleinrichtung 36 auf den Empfänger 28 umgelenkt werden.

Die Umlenkspiegeleinrichtung 36 verfügt über einen Sendespiegel 38 und einen Empfangsspiegel 40. Der Sendespiegel 38 und der Empfangsspiegel 40 sind an bezüglich einer Rotationsachse 42 axial gegenüberliegenden Seiten eines scheibenförmigen Rotors 44 eines als Scheibenläufermotor 46 ausgestalteten Antriebsmotors angeordnet. Der Rotor 44 befindet sich also zwischen dem Empfangsspiegel 40 und dem Sendespiegel 38. Der Rotor 44 wirkt so zusätzlich als optische Falle und verhindert so, dass Licht von der Seite des Sendespiegels 38 zur Seite des Empfangsspiegel 40 gelangen kann und umgekehrt.

Die Rotationsachse 42 ist auf axial gegenüberliegenden Seiten in entsprechenden, in der Figur 5 gezeigten Lagern 48 drehbar gelagert. Die Rotationsachse 42 verläuft senkrecht zu einer Schwenkebene, in der die Sendestrahlen 30 geschwenkt werden sollen. In der üblichen Betriebsorientierung der Umlenkspiegeleinrichtung 36, in der die Sendestrahlen 30 etwa räumlich horizontal geschwenkt werden sollen, verläuft die Rotationsachse 42 räumlich vertikal. In der Darstellung in der Figur 2 verläuft die Schwenkebene parallel zur Zeichenebene und die Rotationsachse 42 verläuft senkrecht zur Zeichenebene.

Auf der dem Sendespiegel 38 zugewandten Seite weist der Rotor 44 außerdem eine Vielzahl von Permanentmagneten 50 auf. Die Permanentmagnete 50 sind bezüglich der Rotationsachse 42 umfangsmäßig am Außenumfang des Rotors 44 ringförmig so angeordnet, dass sich wechselweise ein magnetischer Nordpol N und ein magnetischer Südpol S ergeben. Der Rotor 44 bildet so auf seiner dem Sendespiegel 38 zugewandten Seite eine magnetisch wirkende Codierscheibe 52.

An einer Umfangsseite sind beispielhaft zwei Permanentmagneten 50 in Umfangsrichtung betrachtet kürzer ausgestaltet, so dass deren die Magnetpole N und S näher beieinander liegen. Auf diese Weise ergibt sich dort eine Nullpunktmarkierung 54 für die Codierscheibe 42.

Bei dem Sendespiegel 38 und dem Empfangsspiegel 40 handelt es sich jeweils um ebene rechteckige Spiegel. Der Sendespiegel 38 und der Empfangsspiegel 40 sind jeweils beidseitig verspiegelt, weisen also auf gegenüberliegenden Seiten jeweils eine Spiegeloberfläche auf. Die Spiegeloberflächen des jeweiligen Spiegels 38 und 40 sind jeweils eben und verlaufen parallel zueinander auf gegenüberliegenden Seiten einer jeweiligen Mittelebene des entsprechenden Spiegels 38 beziehungsweise 40. Die jeweiligen Mittelebenen des Sendespiegels 38 und des Empfangsspiegels 40 erstrecken sich in einer gemeinsamen gedachten Ebene, in der sich auch die Rotationsachse 42 befindet. Die Rotationsachse 42 verläuft jeweils durch den Sendespiegel 38 und den Empfangsspiegel 40.

Der Sendespiegel 38 ist bezüglich seiner Fläche kleiner als der Empfangsspiegel 40. Eine Ausdehnung des Empfangsspiegels 40 in bezüglich der Rotationsachse 42 radialer Richtung entspricht dem Außendurchmesser des Rotors 44. Da die entsprechende Ausdehnung des Sendespiegels 38 kürzer ist als die des Empfangsspiegels 40, kann der Sendespiegel 38 platzsparend innerhalb der Ringanordnung der Permanentmagnete 50 angeordnet sein.

Ein Stator 56 des Scheibenläufermotors 46 befindet sich in der Nähe des Rotors 44. In der Figur 3 ist der Stator 56 beispielhaft neben dem Rotor 44 angeordnet. Er kann auch, wie in der Figur 5 gezeigt oberhalb des Rotors 44 und der Codierscheibe 52 platzsparend neben dem Sendespiegel 38 angeordnet sein.

Der Stator 56 weist beispielhaft zwei Erregerspulen 58 auf, mit denen zwei entgegen gerichtete Erregerfelder erzeugt werden können. Durch entsprechende Ansteuerung der Erregerspulen 58 kann der Rotor 44 über die Permanentmagneten 50 in an sich bekannter Weise um die Rotationsachse 42 drehend angetrieben werden. Eine beispielhafte Drehrichtung 60 des Rotors 44 mit dem Sendespiegel 38 und dem Empfangsspiegel 40 ist in der Figur 2 durch einen Pfeil angedeutet. Es versteht sich, dass der Rotor 44 auch in umgekehrter Drehrichtung angetrieben werden kann. Anstatt einer vollständigen Drehung kann auch ein Hin-und-her-Schwenken des Rotors 44 um die Rotationsachse 42 vorgesehen sein.

Ferner verfügt die Umlenkspiegeleinrichtung 36 über einen Abtastsensor 62. Der Abtastsensor 62 kann beispielsweise als Magnetfeldsensor, zum Beispiel als Hall-Sensor, ausgestaltet sein. Mit dem Abtastsensor 62 kann eine Maßverkörperung 64, welche durch die wechselweise angeordneten Magnetpole N, S der Permanentmagnete 50 realisiert wird, gelesen werden. In der Figur 3 ist der der Abtastsensor 62 beispielhaft neben dem Rotor 44 angeordnet. Er kann jedoch auch, wie in der Figur 5 gezeigt oberhalb des Rotors 44 und der Codierscheibe 52 platzsparend neben dem Sendespiegel 38 angeordnet sein.

Der Stator 56, respektive die Erregerspulen 58, und der Abtastsensor 62 sind mittels entsprechenden Leitungen mit der Steuer- und Auswerteelektronik 34 verbunden.

Beim Betrieb des Laserscanners 12 werden mit der Steuer- und Auswerteelektronik 34 die Erregerspulen 58 des Stators 56 so angesteuert, dass ihre Erregerfelder mit den Magnetfeldern der Permanentmagneten 50 so zusammenwirken, dass der Rotor 54 in Drehrichtung 60 um die Rotationsachse 42 gedreht wird. Dabei werden sowohl der Sendespiegel 38 als auch der Empfangsspiegel 40 entsprechend geschwenkt.

Mit dem Abtastsensor 62 werden die entsprechenden wechselnden Magnetfelder der Permanentmagnete 50 gelesen und als entsprechende Signale an die Steuer- und Auswerteelektronik 34 übermittelt. Beim Durchlauf der Nullpunktmarkierung 54 wird dies entsprechend von dem Abtastsensor 62 erfasst und ebenfalls an die Steuer- und Auswerteelektronik 34 übergeben. Auf diese Weise wird die entsprechende Nullpunktwinkelstellung des Sendespiegels 38 und des Empfangsspiegels 40 bei jedem Durchlauf ermittelt.

Die Permanentmagnete 50 dienen sowohl zum Antreiben des Rotors 44 mit Zusammenwirken der Erregerspulen 58 als auch als Drehwinkelgeber 66 zusammen mit dem Abtastsensor 62.

Mit der Steuer- und Auswerteelektronik 34 wird der Sender 26 gepulst angesteuert, sodass Sendestrahlen 30 in Form von Lichtpulsen ausgesendet werden. Die Sendestrahlen 30 treffen auf den Sendespiegel 38 und werden abhängig von der Drehposition des Rotors 44 unter entsprechenden Winkelstellung des Sendespiegels 38 entsprechend in den Überwachungsbereich 14 abgelenkt.

Die Sendestrahlen 30 werden von der Oberfläche des Objekts 16 reflektiert und die entsprechenden Empfangsstrahlen 32 zu der Umlenkspiegeleinrichtung 36 zurückgestrahlt. Die Empfangsstrahlen 32 werden von dem Empfangsspiegel 40 auf den Empfänger 28 umgelenkt. Mit dem Empfänger 28 werden die entsprechenden Empfangsstrahlen 32 in elektrische Empfängersignale umgewandelt und der Steuer- und Auswerteelektronik 34 zugeführt.

Mit der Steuer- und Auswerteelektronik 34 wird eine Lichtlaufzeit, also eine Zeit vom Aussenden der Sendestrahlen 30 bis zum Empfangen der entsprechenden Empfangsstrahlen 32 gemessen und daraus eine Entfernung des Objekts 16 von dem Laserscanner 12 berechnet.

Außerdem wird mit der Steuer- und Empfangselektronik 34 beim Aussenden der Sendestrahlen 30 mittels dem Drehwinkelgeber 66 die entsprechende momentane Drehstellung des Rotors 44 und damit die Winkelstellung des Sendespiegels 38 und des Empfangsspiegels 40 relativ zu der Nullpunktwinkelstellung ermittelt. Daraus wird zusätzlich eine Richtung des Objekts 16 relativ zum Laserscanner 12 bestimmt.

Die Objektdaten, also Entfernung und Richtung, werden mit der Steuer- und Auswerteelektronik 34 an die Steuerelektronik 20 des Fahrerassistenzsystems 18 übermittelt. Mit dieser werden entsprechende Steuersignale erzeugt, welche an die Funktionsteile 22 gesendet werden. So kann beim Erfassen eines Objekts 16 eine Geschwindigkeit des Fahrzeugs 10 verringert, ein Bremsvorgang eingeleitet und/oder mithilfe der Lenkung ein Richtungswechsel vorgenommen werden. Zusätzlich oder alternativ können entsprechende Signal- oder Warnhinweise an den Fahrer ausgegeben werden.

Anstelle oder zusätzlich zu der magnetischen Nullpunktmarkierung 54 und dem Abtastsensor 62 kann eine Nullpunktwinkelstellung des Rotors 44 durch wenigstens einen entsprechenden optischen Referenzdetektor, beispielsweise eine Fotodiode, realisiert werden. Der Referenzdetektor kann außerhalb des Überwachungsbereichs 14 im optischen Weg der Sendestrahlen 30 so angeordnet sein, dass die Sendestrahlen 30 in einer bestimmten Referenz-Drehposition des Rotors 44, welche einer Referenz-Winkelstellung des Sendespiegels 38 entspricht, auf den Referenzdetektor treffen.

## Patentansprüche

1. Umlenkspiegeleinrichtung (36) einer oder für eine insbesondere nach einem Lichtimpulslaufzeitverfahren arbeitenden insbesondere optoelektronischen Detektionsvorrichtung (12), insbesondere eines oder für ein Fahrerassistenzsystem (18) eines Fahrzeugs (10), mit wenigstens einem Spiegel (38, 40) zur Umlenkung von mit wenigstens einem Sender (26) der Detektionsvorrichtung (12) ausgesendeten Sendesignalen (30) in einen Überwachungsbereich (14) der Detektionsvorrichtung (12) und/oder von Empfangssignalen (32) aus von einer Oberfläche wenigstens eines in dem Überwachungsbereich (14) befindlichen Objekts (16) reflektierten Sendesignalen (30), wobei wenigstens ein Spiegel (38, 40) der Umlenkspiegeleinrichtung (36) mit wenigstens einem elektrischen Antriebsmotor (46) um eine Rotationsachse (42) drehbar ist und wobei die Umlenkspiegeleinrichtung (36) wenigstens einen Drehwinkelgeber (66) aufweist, mit dem eine Winkelstellung des wenigstens einen Spiegels (38, 40) bezüglich der Rotationsachse (42) bestimmt werden kann, **dadurch gekennzeichnet, dass** wenigstens ein Rotor (44) des wenigstens einen Antriebsmotors (46) wenigstens eine Maßverkörperung (64) des wenigstens einen Drehwinkelgebers (66) aufweist.

2. Umlenkspiegeleinrichtung nach Anspruch 1, **dadurch gekennzeichnet, dass** der wenigstens eine Antriebsmotor (46) als Scheibenläufermotor ausgestaltet ist.

3. Umlenkspiegelanordnung nach Anspruch 1 oder 2, **dadurch gekennzeichnet, dass** die wenigstens eine Maßverkörperung (64) eine berührungslos, insbesondere magnetisch, wirkende Maßverkörperung (64) ist.

4. Umlenkspiegeleinrichtung nach einem der vorigen Ansprüche, **dadurch gekennzeichnet, dass** wenigstens ein Magnetfeld des wenigstens einen Rotors (44) wenigstens eine magnetisch wirkende Maßverkörperung (64) wenigstens mit bildet.

5. Umlenkspiegeleinrichtung nach einem der vorigen Ansprüche, **dadurch gekennzeichnet, dass** der wenigstens eine Drehwinkelgeber (66) wenigstens ein Referenzmittel (54) aufweist zur Charakterisierung einer Nullpunktstellung des wenigstens einen Rotors (44) und/oder des wenigstens einen Spiegels (38, 40).

6. Umlenkspiegeleinrichtung nach einem der vorigen Ansprüche, **dadurch gekennzeichnet, dass** an dem wenigstens einen Rotor (44), insbesondere gegebenenfalls an einer Codierscheibe (52), wenigstens ein Spiegel (38, 40), insbesondere ein Sendespiegel (38) und/oder ein Empfangsspiegel (40), der Umlenkspiegeleinrichtung (36) angeordnet ist.

7. Umlenkspiegelanordnung nach einem der vorigen Ansprüche, **dadurch gekennzeichnet, dass** der wenigstens eine Rotor (44) und/oder die wenigstens eine Maßverkörperung (64), insbesondere wenigstens eine Codierscheibe (52), bezüglich der Rotationsachse (42) axial zwischen wenigstens einem Sendespiegel (38) und wenigstens einem Empfangsspiegel (40) angeordnet ist.

8. Umlenkspiegeleinrichtung nach einem der vorigen Ansprüche, **dadurch gekennzeichnet, dass** eine Rotationsachse (42) des wenigstens einen Rotors (44) wenigstens abschnittsweise durch wenigstens einen Spiegel (38, 40), insbesondere einen Sendespiegel (38) und/oder einen Empfangsspiegel (40), verläuft.

9. Detektionsvorrichtung (12), insbesondere eines oder für ein Fahrerassistenzsystem (18) eines Fahrzeugs (10), wobei die Detektionsvorrichtung (12) insbesondere optoelektronisch insbesondere nach einem Lichtimpulslaufzeitverfahren arbeitet, aufweisend wenigstens eine Umlenkspiegeleinrichtung (36), insbesondere nach einem der vorigen Ansprüche, mit wenigstens einem Spiegel (38, 40) zur Umlenkung von mit wenigstens einem Sender (26) der Detektionsvorrichtung (12) ausgesendeten Sendesignalen (30) in einen Überwachungsbereich (14) der Detektionsvorrichtung (12) und/oder von Empfangssignalen (32) aus von einer Oberfläche wenigstens eines in dem Überwachungsbereich (14) befindlichen Objekts (16) reflektierten Sendesignalen (30), wobei wenigstens ein Spiegel (38, 40) der Umlenkspiegeleinrichtung (36) mit wenigstens einem elektrischen Antriebsmotor (46) um eine Rotationsachse (42) drehbar ist und wobei die Umlenkspiegeleinrichtung (36) wenigstens einen Drehwinkelgeber (66) aufweist, mit dem eine Winkelstellung des wenigstens einen Spiegels (38, 40) bezüglich der Rotationsachse (42) bestimmt werden kann, **dadurch gekennzeichnet, dass** wenigstens ein Rotor (44) des wenigstens einen Antriebsmotors (46) wenigstens eine Maßverkörperung (64) des wenigstens einen Drehwinkelgebers (66) aufweist.

10. Fahrerassistenzsystem (18) eines Fahrzeugs (10) mit wenigstens einer insbesondere nach einem Lichtimpulslaufzeitverfahren arbeitenden insbesondere optoelektronischen Detektionsvorrichtung (12), insbesondere nach einem der vorigen Ansprüche, wobei die wenigstens eine Detektionsvorrichtung (12) aufweist wenigstens eine Umlenkspiegeleinrichtung (36) mit wenigstens einem Spiegel (38, 40) zur Umlenkung von mit wenigstens einem Sender (26) der Detektionsvorrichtung (12) ausgesendeten Sendesignalen (30) in einen Überwachungsbereich (14) der Detektionsvorrichtung (12) und/oder von Empfangssignalen (32) aus von einer Oberfläche wenigstens eines in dem Überwachungsbereich (14) befindlichen Objekts (16) reflektierten Sendesignalen (30), wobei wenigstens ein Spiegel (38, 40) der Umlenkspiegeleinrichtung (36) mit wenigstens einem elektrischen Antriebsmotor (46) um eine Rotationsachse (42) drehbar ist und wobei die Umlenkspiegeleinrichtung (36) wenigstens einen Drehwinkelgeber (66) aufweist, mit dem eine Winkelstellung des wenigstens einen Spiegels (38, 40) bezüglich der Rotationsachse (42) bestimmt werden kann, **dadurch gekennzeichnet, dass** wenigstens ein Rotor (44) des wenigstens einen Antriebsmotors (46) wenigstens eine Maßverkörperung (64) des wenigstens einen Drehwinkelgebers (66) aufweist.
